(19) **Europäisches Patentamt**
**European Patent Office**
**Office européen des brevets**

(11) **EP 4 654 183 A1**

(12) **EUROPEAN PATENT APPLICATION**
published in accordance with Art. 153(4) EPC

(43) Date of publication:
**26.11.2025 Bulletin 2025/48**

(21) Application number: **24789146.8**

(22) Date of filing: **29.03.2024**

(51) International Patent Classification (IPC):
**G10L 15/00** (2013.01)  **G06F 40/00** (2020.01)
**G06N 20/00** (2019.01)  **G06N 3/08** (2023.01)
**G06F 16/332** (2025.01)

(86) International application number:
**PCT/SG2024/050199**

(87) International publication number:
**WO 2024/215250 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.04.2023 CN 202310397072**

(71) Applicant: **Alibaba Innovation Private Limited
Singapore 189554 (SG)**

(72) Inventors:
• **LIN, Ting-en**
  **Beijing 100102 (CN)**
• **YU, Tianshu**
  **Beijing 100102 (CN)**
• **GAO, Haoyu**
  **Beijing 100102 (CN)**
• **YANG, Min**
  **Beijing 100102 (CN)**
• **WU, Yuchuan**
  **Beijing 100102 (CN)**
• **MA, Wentao**
  **Beijing 100102 (CN)**
• **HUANG, Fei**
  **Sunnyvale, California 94085 (US)**
• **LI, Yongbin**
  **Beijing 100102 (CN)**

(74) Representative: **Novagraaf Technologies
Bâtiment O2
2, rue Sarah Bernhardt
CS90017
92665 Asnières-sur-Seine Cedex (FR)**

(54) **MACHINE LEARNING MODEL TRAINING METHOD AND APPARATUS, DIALOGUE METHOD AND APPARATUS, DEVICE, AND MEDIUM**

(57) Embodiments of the present disclosure relate to a method and an apparatus for training a machine learning model, a dialog method, a dialog apparatus, a device, and a medium. In the present disclosure, speech information and text information corresponding to the speech information are obtained, and encoding is performed on the text information and the speech information respectively, to obtain text encoding information and speech encoding information; fusion is performed on the text encoding information and the speech encoding information, to obtain fused encoding information; time information, in the speech information, corresponding to each text unit in the text information is predicted based on the fused encoding information; and a first machine learning model is pre-trained based on the predicted time information and a position mark, in the speech information, of a speech unit corresponding to each text unit in the text information, to obtain a pre-trained model.

Speech information and text information corresponding to the speech information are obtained — S101

Encoding is performed on the text information and the speech information respectively, to obtain text encoding information and speech encoding information — S102

Fusion is performed on the text encoding information and the speech encoding information, to obtain fused encoding information — S103

Time information, in the speech information, corresponding to each text unit in the text information is predicted based on encoding information, in the fused encoding information, corresponding to the text information — S104

A first machine learning model is pre-trained based on the predicted time information and a position mark, in the speech information, of a speech unit corresponding to each text unit in the text information, to obtain a pre-trained model — S105

**FIG. 1**

EP 4 654 183 A1

**Description**

CROSS-REFERENCE TO RELATED APPLICATIONS

The present disclosure claims priority of Chinese Patent Application No. 202310397072.3, filed to China National Intellectual Property Administration on April 11, 2023 and titled "METHOD AND APPARATUS FOR TRAINING MACHINE LEARNING MODEL, DIALOG METHOD, DIALOG APPARATUS, DEVICE, AND MEDIUM", the content of which is hereby incorporated by reference in its entirety.

TECHNICAL FIELD

The present disclosure relates to the field of information technologies, and in particular, to a method and an apparatus for training a machine learning model, a dialog method, a dialog apparatus, a device, and a medium.

BACKGROUND OF THE INVENTION

Currently, an intelligent customer service may dialog with a user in some business scenarios, to provide services such as business consultation and business processing for the user. Specifically, the intelligent customer service is implemented through a machine learning model deployed on a computing device such as a computer or a computer cluster.
However, the current machine learning model has low accuracy in understanding a user speech.

SUMMARY OF THE INVENTION

To solve the foregoing technical problem or at least partially solve the foregoing technical problem, embodiments of the present disclosure provide a method and an apparatus for training a machine learning model, a dialog method, a dialog apparatus, a device, and a medium, to improve of a capability of a pre-trained model in understanding speech information and text information, thereby improving accuracy of the pre-trained model in understanding a user speech.
According to a first aspect, some embodiments of the present disclosure provide a method for training a machine learning model, including the following steps.
Speech information and text information corresponding to the speech information are obtained.
Encoding is performed on the text information and the speech information respectively, to obtain text encoding information and speech encoding information.
Fusion is performed on the text encoding information and the speech encoding information, to obtain fused encoding information.
Time information, in the speech information, corresponding to each text unit in the text information is predicted based on encoding information, in the fused encoding information, corresponding to the text information.
A first machine learning model is pre-trained based on the predicted time information and a position mark, in the speech information, of a speech unit corresponding to each text unit in the text information.
According to a second aspect, some embodiments of the present disclosure provide a method for training a machine learning model, including the following steps.
Sample data of a target task is obtained, where the sample data includes data to be processed and a marking result of the data to be processed, and the data to be processed includes a sample speech and a sample text corresponding to the sample speech.
The data to be processed is inputted into a second machine learning model, to output a processed result, where the second machine learning model is a pre-trained model obtained based on the training method in the first aspect.
The second machine learning model is trained based on the processed result outputted by the second machine learning model and the marking result of the data to be processed, to obtain a trained machine learning model.
According to a third aspect, some embodiments of the present disclosure provide an intelligent dialog method, including the following steps.
A historical dialog between a target user and an intelligent dialog system and text information corresponding to the historical dialog are obtained.
The historical dialog and the text information are inputted into a trained machine learning model, to output at least one of a sentiment, an emotion, an intention, or key information of
the target user, where the machine learning model is obtained by training based on the method in the second aspect.
An intelligent dialog with the target user is performed based on at least one of the sentiment, the emotion, the intention, or the key information of the target user.

According to a fourth aspect, some embodiments of the present disclosure provide an apparatus for training a machine learning model, including:

an obtaining module, configured to obtain speech information and text information corresponding to the speech information;

an encoding module, configured to perform encoding on the text information and the speech information respectively, to obtain text encoding information and speech encoding information;

a fusion module, configured to perform fusion on the text encoding information and the speech encoding information, to obtain fused encoding information;

a prediction module, configured to predict time information, in the speech information, corresponding to each text unit in the text information based on encoding information, in the fused encoding information, corresponding to the text information; and

a pre-training module, configured to pre-train the first machine learning model based on the predicted time information and a position mark, in the speech information, of a speech unit corresponding to each text unit in the text information.

According to a fifth aspect, some embodiments of the present disclosure provide an electronic device, including:

a memory;

a processor; and

a computer program.

The computer program is stored in the memory and configured to be executed by the processor to implement the method in the first aspect, the second aspect, or the third aspect.

According to a sixth aspect, some embodiments of the present disclosure provide a computer-readable storage medium, storing a computer program. The computer program is executed by a processor to implement the method in the first aspect, the second aspect, or the third aspect.

According to the method and the apparatus for training a machine learning model, the dialog method, the dialog apparatus, the device, and the medium provided in the embodiments of the present disclosure, the speech information and the text information corresponding to the speech information are obtained, and encoding is performed on the text information and the speech information respectively, to obtain the text encoding information and the speech encoding information. Further, fusion is performed on the text encoding information and the speech encoding information, to obtain the fused encoding information; the time information, in the speech information, corresponding to each text unit in the text information is predicted based on the fused encoding information; and then the first machine learning model is pre-trained based on the predicted time information and the position mark, in the speech information, of the speech unit corresponding to each text unit in the text information, to obtain the pre-trained model. In this way, the pre-trained model can align the speech information and the text information in timing, for example, align a finer text unit in the text information and a finer speech unit in the speech information, thereby improving a capability of the pre-trained model in understanding the speech information and the text information, and improving accuracy of the pre-trained model in understanding a user speech.

BRIEF DESCRIPTION OF DRAWINGS

Drawings herein are incorporated into the specification and constitute a part of the specification, which show embodiments that conform to the present disclosure and are used together with the specification to explain the principles of the present disclosure.

In order to more clearly describe technical solutions in the embodiments of the present disclosure or in the related art, drawings required for describing the embodiments or the related art are briefly described below. Apparently, a person having ordinary skill in the art may still derive other drawings from these drawings without any creative effort.

FIG. 1 is a flowchart of a model pre-training method according to some embodiments of the present disclosure.

FIG. 2 is a schematic diagram of an application scenario according to some embodiments of the present disclosure.

## EP 4 654 183 A1

FIG. 3 is a schematic diagram of a machine learning model according to some embodiments of the present disclosure.

FIG. 4 is a schematic diagram of a dialog between a user and an intelligent dialog system according to some embodiments of the present disclosure.

FIG. 5 is a schematic diagram of timing prediction according to some embodiments of the present disclosure.

FIG. 6 is a schematic diagram of a machine learning model according to some embodiments of the present disclosure.

FIG. 7 is a structural schematic diagram of a first loss function according to some embodiments of the present disclosure.

FIG. 8 is a schematic diagram of multiple types of sample data according to some embodiments of the present disclosure.

FIG. 9 is a flowchart of a model pre-training method according to some embodiments of the present disclosure.

FIG. 10 is a schematic diagram of a machine learning model according to some embodiments of the present disclosure.

FIG. 11 is a flowchart of a model training method according to some embodiments of the present disclosure.

FIG. 12 is a flowchart of an intelligent dialog method according to some embodiments of the present disclosure.

FIG. 13 is a structural schematic diagram of a model pre-training apparatus according to some embodiments of the present disclosure.

FIG. 14 is a structural schematic diagram of a model training apparatus according to some embodiments of the present disclosure.

FIG. 15 is a structural schematic diagram of an intelligent dialog apparatus according to some embodiments of the present disclosure.

FIG. 16 is a structural schematic diagram of an electronic device according to some embodiments of the present disclosure.

DETAILED DESCRIPTION OF THE INVENTION

In order to understand the foregoing objects, features, and advantages of the present disclosure more clearly, solutions of the present disclosure are further described below. It is to be noted that embodiments of the present disclosure and features in the embodiments is combined with each other in a case that no conflict occurs.

Many specific details are set forth in the following description to facilitate a full understanding of the present disclosure, but the present disclosure may alternatively be implemented in other manners different from those described herein. Apparently, the embodiments in the specification are some rather than all of the embodiments of the present disclosure.

It is to be noted that speech information (including, but not limited to, a user speech collected by a terminal device) and text information (including, but not limited to, text information corresponding to the user speech) involved in the present disclosure are both information and data that are authorized by a user or that are fully authorized by all parties, and collection, use, and processing of relevant data need to comply with relevant laws, regulations, and standards of relevant countries and regions. Corresponding operation entries are provided for a user to authorize or reject.

In addition, a method for training a machine learning model and a dialog method provided in the present disclosure involve explanations of the following terms. Details are as follows.

Speech-semantic joint modeling: A system uses both a speech and a text transcription corresponding to the speech as an input, and implements improvement in understanding of both a speech and a text under guidance of tasks such as speech-text alignment.

Pre-training: It is an important means that enables a model to perform unsupervised learning in a large corpus, which can greatly improve results of downstream tasks.

Timing characteristic: It refers to a characteristic that an input sequence has a chronological order. A speech and

4

a text both have a timing characteristic.

Navigation: It means that a user makes a call to a speech robot.

Outbound: It means that a speech robot makes a call to a user.

In general, an intelligent customer service may dialog with a user in some business scenarios, to provide services such as business consultation and business processing for the user. Specifically, the intelligent customer service is implemented through a machine learning model deployed on a computing device such as a computer or a computer cluster. However, the current machine learning model has low accuracy in understanding a user speech. In view of the problem, the embodiments of the present disclosure provide a method for training a machine learning model. The method is described below with reference to specific embodiments.

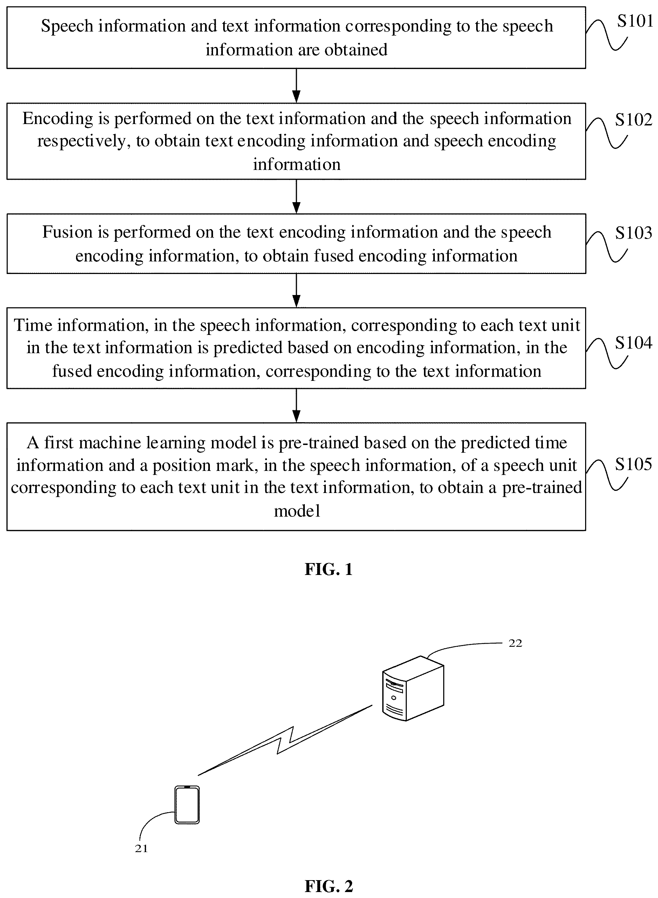

FIG. 1 is a flowchart of a method for training a machine learning model according to some embodiments of the present disclosure. The method for training a machine learning model is specifically a pre-training method. The method is performed by an apparatus for training a machine learning model. The apparatus is implemented through software and/or hardware. The apparatus is arranged in an electronic device, for example, a server or a terminal. The terminal specifically includes a mobile phone, a computer, a tablet computer, or the like. The server is specifically a server of a cloud, and the method for training a machine learning model is performed by the cloud. Computing nodes (cloud servers) is deployed on the cloud, and each computing node has processing resources such as computing and storage resources. On the cloud, multiple computing nodes are organized to provide a service. Certainly, one computing node may also provide at least one types of service. A manner of providing the service by the cloud is providing a service interface to outside so that a user calls the service interface to use a corresponding service. The service interface includes forms such as a software development kit (SDK) and an application programming interface (API). In addition, the method for training the machine learning model described in some embodiments is applicable to an application scenario shown in FIG. 2. As shown in FIG. 2, the application scenario includes a terminal 21 and a server 22. The server 22 pre-trains a first machine learning model by using the method for training the machine learning model described in some embodiments. A pre-trained model is obtained after the pre-training of the first machine learning model. Further, the pre-trained model is retained in the server 22, or the server 22 deploys the pre-trained model to the terminal 21 or another server. The method is described in detail below with reference to FIG. 2. As shown in FIG. 1, specific steps of the method are as follows.

In step S101, speech information and text information corresponding to the speech information are obtained.

For example, an intelligent dialog system is arranged in the server 22. The terminal 21 shown in FIG. 2 collects a user speech and sends the user speech to the server 22. The intelligent dialog system provides a speech reply based on the user speech. Further, the server 22 feeds back the speech reply of the intelligent dialog system to the terminal 21, and so on, so that a user of the terminal 21 performs a speech dialog with the intelligent dialog system. During the dialog, the server 22 obtains speech information. The speech information is a speech dialog between the user and the intelligent dialog system. Further, the server 22 further converts the speech dialog into text information corresponding to the speech dialog through automatic speech recognition (ASR). That is, the text information is a text transcription of the speech dialog. Alternatively, the speech information obtained by the server 22 is a user speech, and the text information is a text transcription of the user speech.

Specifically, the speech information and the text information corresponding to the speech information are used as an input of the first machine learning model. In some embodiments, the text information includes at least one sentence. The speech information includes a speech of each of the at least one sentence, or includes speeches of some of the at least one sentence.

In step S102, encoding is performed on the text information and the speech information respectively, to obtain text encoding information and speech encoding information.

In some embodiments, the first machine learning model includes a text encoder and a speech encoder. The text encoder is configured to perform encoding on the text information, to obtain the text encoding information. The speech encoder is configured to perform encoding on the speech information, to obtain the speech encoding information.

In some embodiments, the text encoder performs encoding on each sentence contained in the text information respectively, to obtain the text encoding information. The text encoding information includes a representation vector of each sentence. Similarly, the speech encoder may perform encoding on a speech of each sentence in the speech information respectively, to

obtain the speech encoding information. The speech encoding information includes a representation vector of the speech of each sentence.

In some embodiments, an operation of performing encoding on the text information and the speech information respectively, to obtain the text encoding information and the speech encoding information includes the following steps. Encoding is performed on at least one encoding unit respectively contained in each text unit in the text information through the text encoder, to obtain the text encoding information, where the text encoding information includes a representation vector of each encoding unit. Encoding is performed on each speech clip in the speech information through the speech encoder, to obtain the speech encoding information, where the speech encoding information includes a representation vector of each speech clip.

For example, each sentence in the text information is composed of a text unit, and the text unit is a character, a word, a phase, a word group, a sub-word, or a single word. For example, there is a sentence "他们赢了五把"". When a word is deemed as a text unit, the sentence is divided into five phrases, i.e., "他", "们", "赢", "了", and "五把". Each text unit may further include at least one encoding unit. For example, "他" includes one word, and therefore "他" includes one encoding unit, that is, "他". "五把" include two words. In response to one word being deemed as one encoding unit, "五把" include two encoding units. Therefore, the sentence "他们赢了五把" includes six encoding units, i.e., "他", "们", "赢", "了", "五" and "把". Therefore, during encoding on the sentence "他们赢了五把" through the text encoder, encoding is respectively performed on the six encoding units. After the encoding, each encoding unit corresponds to one representation vector.

For another example, there is a sentence "They won five games successfully". The sentence includes five single words in total, and each single word is deemed as a text unit. Since first four single words are all relatively short, each of the first four single words is deemed as one encoding unit. However, the last single word "successfully" is relatively long, which is divided into two encoding units, i.e., "success" and "ively". Therefore, during encoding on the sentence "They won five games successively" through the text encoder, encoding is respectively performed on the six encoding units, i.e., "They", "won", "five", "games", "success", and "ively". After the encoding, each encoding unit corresponds to one representation vector.

Since the text information is not limited to one sentence, each sentence may include multiple text units, and each text unit further includes at least one encoding unit, during encoding on the text information through the text encoder, encoding is performed on each encoding unit in the text information through the text encoder, to obtain text encoding information. The text encoding information includes the representation vector of each encoding unit.

In addition, a speech of each sentence in the speech information is an audio signal with a length of 10 seconds. Before speech encoding is performed, the speech of each sentence is further split into multiple speech clips. For example, a length of each speech clip is one second. Further, encoding is performed on each speech clip in the speech information through the speech encoder, to obtain speech encoding information. The speech encoding information includes a representation vector of each speech clip.

In step S103, fusion is performed on the text encoding information and the speech encoding information, to obtain fused encoding information.

In some embodiments, the first machine learning model further includes a modal fusion layer. After the text encoding information and the speech encoding information described above are obtained, the text encoding information and the speech encoding information are spliced, and a spliced result is used as an input of the modal fusion layer, so that the modal fusion layer performs fusion on the text encoding information and the speech encoding information, to obtain fused encoding information. The fused encoding information is further denoted as a joint representation vector. Specifically, an input of the modal fusion layer is in one-to-one correspondence with an output of the modal fusion layer. For example, the input of the modal fusion layer includes representation vectors of m encoding units and representation vectors of n speech clips, that is, the input of the modal fusion layer includes m + n representation vectors. Therefore, the output of the modal fusion layer includes m + n representation vectors, and the m + n representation vectors in the input are in one-to-one correspondence with the m + n representation vectors in the output. For each representation vector outputted by the modal fusion layer, the representation vector includes both a text component and a speech component. Therefore, each representation vector outputted by the modal fusion layer is denoted as a fused representation vector.

In step S104, time information, in the speech information, corresponding to each text unit in the text information is predicted based on encoding information, in the fused encoding information, corresponding to the text information.

For example, the text information includes m encoding units, the speech information includes n speech clips, and the input of the modal fusion layer includes representation vectors of the m encoding units and representation vectors of the n speech clips. Since the input of the modal fusion layer is in one-to-one correspondence with the output of the modal fusion layer, first m representation vectors outputted by the modal fusion layer are the encoding information corresponding to the text information, and last n representation vectors outputted by the modal fusion layer are the encoding information corresponding to the speech information. Since each representation vector outputted by the modal fusion layer includes both the text component and the speech component, the first machine learning model may predict the time information, in the speech information, corresponding to each text unit in the text information based on the first m representation vectors outputted by the modal fusion layer. For example, the time information, in the speech information, corresponding to each text unit includes a start time point and an end time point, in the speech information, corresponding to the text unit. It is understood that text units such as "他", "们", "赢", "了", and "五把" are respectively text information. Each text unit corresponds to a speech word, and the speech word is speech information. A speech word corresponding to a text unit is an utterance of the user or the intelligent dialog system for the text unit. Therefore, the start time point, in the speech information, corresponding to the text unit is specifically a start time point (for example, an utterance start moment), in the speech information, corresponding to a speech word corresponding to the text unit, and the end time point corresponding to the text unit in the speech information is specifically an end time point (for example, an utterance end moment), in the speech information, corresponding to the speech word corresponding to the text unit.

In step S105, a first machine learning model is pre-trained based on the predicted time information and a position mark, in the speech information, of a speech unit corresponding to each text unit in the text information, to obtain a pre-trained model.

Specifically, in some embodiments, a position, in the speech information, of the speech unit corresponding to each text unit in the text information is pre-marked. Further, a first loss function is constructed based on the time information, in the speech information, corresponding to each text unit in the text information predicted by the first machine learning model and the position, in the speech information is pre-marked, of the speech unit corresponding to each text unit in the text information, and then the first machine learning model is pre-trained based on the first loss function.

For example, the text information in some embodiments is "他们赢了五把", and the speech information is a speech of "他们赢了五把". In some embodiments, a position, in the speech information, of the speech unit corresponding to each text unit in the text information is pre-marked. For example, the text information includes five text units: "他", "们", "赢", "了", and "五把". The speech information includes speech words respectively corresponding to "他", "们", "赢", "了", and "五把". The speech words are denoted as speech units. For example, the speech word corresponding to "他" is an utterance of "他". In some embodiments, a start position (for example, a start time point or a start moment) and an end position (for example, an end time point or an end moment), in the speech information, of the speech word corresponding to "他" is pre-marked. Similarly, start positions and end positions, in the speech information, of the speech words respectively corresponding to "他", "们", "赢", "了", and "五把" are pre-marked. Further, the first loss function is constructed based on the start time points and the end time points, in the speech information, of "他", "们", "赢", "了", and "五把" that are predicted by the first machine learning model and the start positions and the end positions, in the speech information, of "他", "们", "赢", "了", and "五把" that are pre-marked.

Specifically, a first difference is calculated based on the start time points, in the speech information, of "他", "们", "赢", "了", and "五把" that are predicted by the first machine learning model and the start positions, in the current speech, of the speech words respectively corresponding to "他", "们", "赢", "了", and "五把" that are pre-marked. A second difference is calculated based on the end time points, in the speech information, of "他", "们", "赢", "了", and "五把" that are predicted by the first machine learning model and the end positions, in the current speech, of the speech words respectively corresponding to "他", "们", "赢", "了", and "五把" that are pre-marked. Further, the first loss function is constructed based on the first difference and the second difference. In addition, the first machine learning model is pre-trained based on the first loss function, to obtain a pre-trained model.

In some embodiments of the present disclosure, the speech information and the text information corresponding to the speech information are obtained, and encoding is performed on the text information and the speech information respectively, to obtain the text encoding information and the speech encoding information. Further, fusion is performed on the text encoding information and the speech encoding information, to obtain the fused encoding information; the time information, in the speech information, corresponding to each text unit in the text information is predicted based on the fused encoding information; and then the first machine learning model is pre-trained based on the predicted time information and the position mark, in the speech information, of the speech unit corresponding to each text unit in the text information, to obtain the pre-trained model. In this way, the pre-trained model may align the speech information and the text information in timing, for example, align a finer text unit in the text information and a finer speech unit in the speech information, thereby improving a capability of the pre-trained model in understanding the speech information and the text information, and improving accuracy of the pre-trained model in understanding a user speech.

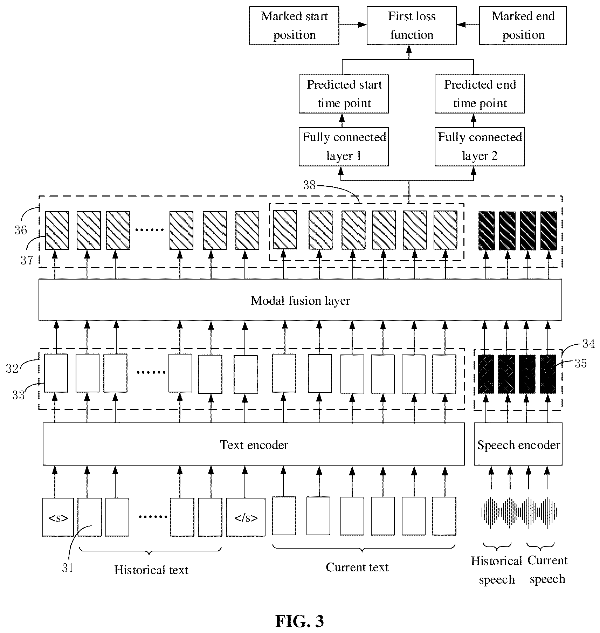

FIG. 3 is a structural schematic diagram of a first machine learning model. Specifically, the first machine learning model includes a text encoder, a speech encoder, and a modal fusion layer. The pre-training method is described in detail below with reference to FIG. 3.

Specifically, an input of the first machine learning model includes text information and speech information, that is, the input of the first machine learning model is multimodal information. Optionally, the speech information includes a historical speech and a current speech, and the text information includes a historical text and a current text. In other words, information of each modal includes historical information and current information. For example, when the speech information is a speech dialog between a user and an intelligent dialog system, as content of the dialog continuously increases over time, some speeches during the dialog are deemed as a historical speech, and some speeches are deemed as a current speech. Similarly, since the text information is a text transcription of the speech dialog, some sentences in the text information are deemed as the historical text, and some sentences are deemed as the current text.

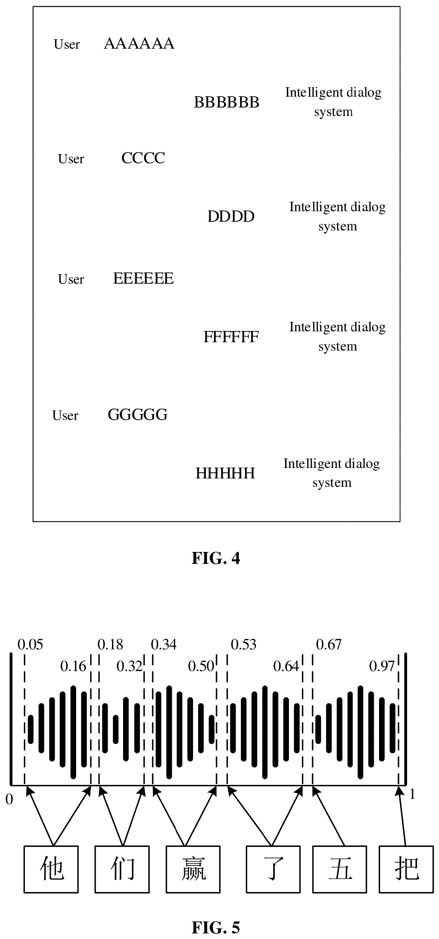

FIG. 4 is a schematic diagram of a dialog between a user and an intelligent dialog system. It is assumed that dialog content shown in FIG. 4 is a text transcription. A text transcription of each sentence the user says is denoted as one round of text, and a text transcription of each sentence the intelligent dialog system says is denoted as one round of text. Therefore, the dialog content shown in FIG. 4 is eight rounds of texts, that is, "AAAAAA", "BBBBBB", "CCCC", "DDDD", "EEEEEE", "FFFFFF", "GGGGG", and "HHHHH", each being one round of text. In addition, in some embodiments, the first seven rounds of texts in the eight rounds of texts is denoted as a historical text, and the last round of text. That is, the text "HHHHH", is denoted as a current text. Similarly, since each round of text in the eight rounds of texts corresponds to one speech, and one speech is denoted as one round of speech, the eight rounds of texts correspond to eight rounds of speeches, the first seven rounds of speeches in the eight rounds of speeches are denoted as a historical speech, and the last round of speech, that is, a speech corresponding to "HHHHH", is denoted as a current speech. In addition, a maximum length of each round of speech is 10 seconds.

Since text information and speech information are information in two different modalities, a storage space occupied by a same quantity of rounds of texts is different from a storage space occupied by a same quantity of rounds of speeches. For example, the storage space occupied by the same quantity of rounds of speeches is larger. Therefore, the same quantity of rounds of texts and the same quantity of rounds of speeches are used as an input of the first machine learning model, or a first quantity of rounds of texts and a second quantity of rounds of speeches is used as an input of the first machine learning model. The first quantity of rounds herein is greater than the second quantity of rounds.

For example, in some embodiments, eight rounds of texts and two rounds of speeches are selected as the input of the first machine learning model shown in FIG. 3. Specifically, the eight rounds of texts include seven rounds of historical texts and one round of current text. The two rounds of speeches include one round of historical speech and one round of current speech. In addition, the one round of current text herein is aligned with the one round of current speech. For example, the one round of current text herein is "HHHHH", and the one round of current speech is a speech corresponding to "HHHHH". Therefore, the historical text shown in FIG. 3 is the seven rounds of historical texts herein, and the current text shown in FIG. 3 is one round of current text herein. The historical speech shown in FIG. 3 is one round of historical speech herein, and the current speech shown in FIG. 3 is one round of current speech herein. That is, the seven rounds of historical texts and the one round of current text constitute the text information, and the one round of historical speech and the one round of current speech constitute the speech information. Further, encoding is performed on the text information through the text encoder, to obtain text encoding information, and encoding is performed on the speech information through the speech encoder, to obtain speech encoding information.

As shown in FIG. 3, in order to distinguish the seven rounds of historical texts from the one round of current text, a preset symbol <s> is added to a start position of the seven rounds of historical texts, and a preset symbol </s> is added to a position between the seven rounds of historical texts and the one round of current text. Alternatively, the preset symbol </s> is added to a position between every two adjacent rounds of texts, that is, </s> is arranged to separate each round of text from others. Similarly, the historical speech and the current speech is separated or each round of speech is separated from others by using preset symbols such as <s> and </s>.

Further, encoding is performed on <s>, the foregoing seven rounds of historical texts, </s>, and the foregoing one round of current text through the text encoder, and encoding is performed on the foregoing one round of historical speech and one round of current speech through the speech encoder.

For example, for the foregoing seven rounds of historical texts and the one round of current text, each round of text is a sentence. Each sentence is composed of text units, and each text unit further includes at least one encoding unit. Therefore, the historical text and the current text shown in FIG. 3 is respectively divided into multiple encoding units. For example, a box 31 represents any one of encoding units. In addition, the preset symbol <s> is deemed as one encoding unit, and the preset symbol </s> is deemed as one encoding unit. As shown in FIG. 3, after encoding is performed on each encoding unit through the text encoder, text encoding information is obtained. The text encoding information includes a representation vector of each encoding unit. For example, the text encoding information includes each representation vector in a box 32 shown in FIG. 3. Each small box (for example, a box 33) in the box 32 represents a representation vector of one encoding unit.

In addition, in some embodiments, the historical speech and the current speech shown in FIG. 3 are respectively an audio signal having a length of 10 seconds. Before encoding is performed, the historical speech is split into multiple speech clips, and the current speech is split into multiple speech clips. For example, a length of each speech clip is one second. As shown in FIG. 3, encoding is performed on each speech clip in the historical speech through the speech encoder, and encoding is performed on each speech clip in the current speech through the speech encoder, to obtain speech encoding information. The speech encoding information includes a representation vector of each speech clip. For example, the speech encoding information includes each representation vector in a box 34 shown in FIG. 3. Each small box (for example, a box 35) in the box 34 represents a representation vector of one speech clip.

As shown in FIG. 3, the text encoding information represented by the box 32 and the speech encoding information represented by the box 34 are spliced, and a spliced result is used as an input of the modal fusion layer, so that the modal fusion layer performs fusion on the text encoding information and the speech encoding information, to obtain fused encoding information. The fused encoding information is further denoted as a joint representation vector. For example, the fused encoding information includes each representation vector in a box 36 shown in FIG. 3, and each small box (for example, a box 37) in the box 36 represents one representation vector outputted by the modal fusion layer. For example, the box 33 represents a representation vector of the preset character <s>, and the box 37 represents a first representation vector outputted by the modal fusion layer. The first representation vector is a fusion result of the text encoding information and the speech encoding information. That is, the first representation vector is a fusion result of the representation vector of the preset character <s>, a representation vector of each encoding unit in the historical text, a representation vector of the preset character </s>, a representation vector of each encoding unit in the current text, a representation vector of each speech clip in the historical speech, and a representation vector of each speech clip in the current speech. Therefore, the first representation vector includes not only the text component but also the speech component. Similarly, all other representation vectors outputted by the modal fusion layer each include both a text component and a speech component.

Further, some representation vectors are captured from each representation vector in the box 36 shown in FIG. 3. For example, representation vectors corresponding to the current text outputted by the modal fusion layer, that is, representation vectors in a box 38, are captured. Further, time information, in the current speech, corresponding to each text unit in the current text is predicted based on each representation vector in the box 38. For example, the current speech is a speech with a length of 10 seconds. After the length of the current speech is normalized, a start position of the current speech is denoted as 0, and an end position thereof is denoted as 1. As shown in FIG. 3, a start time point, in the current speech, corresponding to each text unit in the current text is predicted through a fully connected layer 1, and an end time point, in the current speech, corresponding to each text unit in the current text is predicted through a fully connected layer 2.

For example, as shown in FIG. 5, assuming that the current text is "他们赢了五把", a start time point (for example, 0.05) and an end time point (for example, 0.16), in the current speech, corresponding to "他", a start time point (for example, 0.18) and an end time point (for example, 0.32), in the current speech, corresponding to "们", ..., and a start time point (for example, 067) and an end time point (for example, 0.97), in the current speech, corresponding to "五把" is predicted based on representation vectors corresponding to the current text outputted by the modal fusion layer.

For example, the current text and the current speech are respectively samples. Therefore, a position, in the speech information, of a speech unit corresponding to each text unit in the current text is pre-marked. For example, the current speech includes speech words respectively corresponding to "他", "们", "赢", "了", and "五把". The speech words are denoted as speech units. For example, the speech word corresponding to "他" is an utterance of "他". In some embodiments, a start position (for example, a start time point or a start moment) and an end position (for example, an end time point or an end moment), in the current speech, of the speech word corresponding to "他" is pre-marked. Similarly, start positions and end positions, in the current speech, of speech words respectively corresponding to "们", "赢", "了", and "五把" is pre-marked. Further, the first difference is constructed based on the start time point, in the current speech, of each of "他", "们", "赢", "了", and "五把" predicted by the fully connected layer 1 and the pre-marked start position, in the current speech, of the speech word corresponding to each of "他", "们", "赢", "了", and "五把", and the second difference is constructed based on the end time point, in the current speech, of each of "他", "们", "赢", "了", and "五把" predicted by the fully connected layer 2 and the pre-marked end position, in the current speech, of the speech word corresponding to

each of "他", "们", "赢", "了", and "五把". Further, the first loss function is constructed based on the first difference and the second difference, and the first machine learning model shown in FIG. 3 is pre-trained through the first loss function, to obtain a pre-trained model.

In the foregoing embodiment, the fused encoding information includes the fused representation vector corresponding to each encoding unit and the fused representation vector corresponding to each speech clip. An operation of predicting the time information, in the speech information, corresponding to each text unit in the text information based on the fused encoding information includes the following steps. In response to the text unit including one encoding unit, a start time point and an end time point, in the speech information, corresponding to the text unit are predicted based on a fused representation vector corresponding to the encoding unit. In response to the text unit including multiple encoding units, a start time point, in the speech information, corresponding to the text unit is predicted based on a fused representation vector corresponding to a first encoding unit in the multiple encoding units, and an end time point, in the speech information, corresponding to the text unit is predicted based on a fused representation vector corresponding to a last encoding unit in the multiple encoding units.

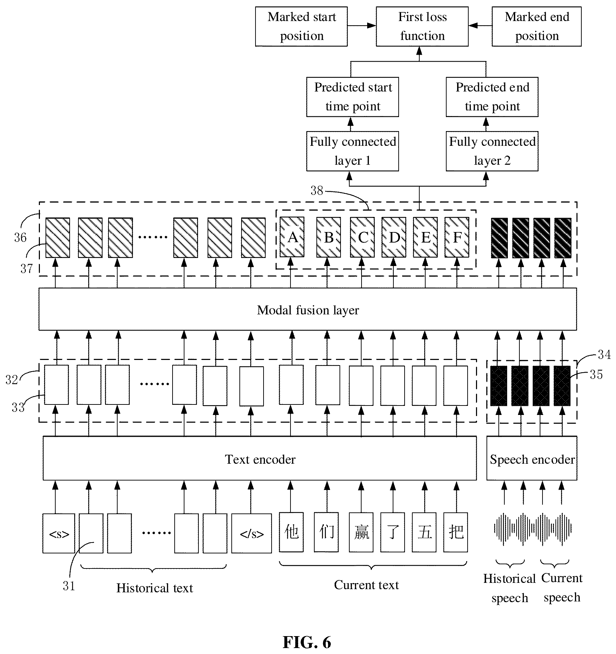

As shown in FIG. 6, each fused representation vector outputted by the modal fusion layer includes a fused representation vector corresponding to the preset character <s>, a fused representation vector corresponding to each encoding unit in the historical text, a fused representation vector corresponding to the preset character </s>, a fused representation vector corresponding to each encoding unit in the current text, and a fused representation vector corresponding to each speech clip. Specifically, when there are eight rounds of historical texts eight rounds of historical speeches, and the eight rounds of historical texts are in one-to-one alignment with the eight rounds of historical speeches, time information, in the historical speech, corresponding to each text unit in the historical text is predicted based on the fused representation vector corresponding to each encoding unit in the historical text. For example, a start time point and an end time point, in a 1st round of historical speech, corresponding to each text unit in a 1st round of historical text are predicted based on a fused representation vector corresponding to each encoding unit in the 1st round of historical text, ..., and a start time point and an end time point, in an 8th round of historical speech, corresponding to each text unit in the 8th round of historical text are predicted. In addition, since the current text and the current speech are aligned, the start time point and the end time point, in the current speech, corresponding to each text unit in the current text are predicted based on the fused representation vector corresponding to each encoding unit in the current text.

For example, the current text is "他们赢了五把", and "他", "们", "赢", "了", "五" and "把" each are an encoding unit. Fused representation vectors outputted by the modal fusion layer include fused representation vectors respectively corresponding to "他", "们", "赢", "了", "五" and "把". For example, A shown in FIG. 6 represents a fused representation vector corresponding to "他", ..., F represents a fused representation vector corresponding to "把". "他", "们", "赢", and "了" each are a text unit, and the text unit includes one encoding unit. For example, "他" is a text unit, the text unit includes one encoding unit, and the encoding unit is "他", that is, "他" is a text unit and is also an encoding unit contained in the text unit. Therefore, a start time point and an end time point, in current speech, corresponding to "他" is predicted based on the fused representation vector A corresponding to "他". For example, the fully connected layer 1 shown in FIG. 6 includes a parameter $W_{start}$, the fully connected layer 2 includes a parameter $W_{end}$, the start time point, in the current speech, corresponding to "他" predicted by the fully connected layer 1 is denoted as $W_{start}A$, and the end time point, in the current speech, corresponding to "他" predicted by the fully connected layer 2 is denoted as $W_{end}A$. Similarly, the fully connected layer 1 may further predict a start time point, in the current speech, corresponding to each of "们", "赢", and "了", and the fully connected layer 2 may further predict an end time point, in the current speech, corresponding to each of "们", "赢", and "了".

In addition, "五把" is a text unit, but the text unit includes multiple encoding units, for example, "五" is a first encoding unit in the text unit, and "把" is a last encoding unit in the text unit. Therefore, a start time point, in the current speech, corresponding to "五把" is predicted based on a fused representation vector corresponding to the first encoding unit, and an end time point, in the current speech, corresponding to "五把" is predicted based on a fused representation vector corresponding to the last encoding unit. For example, the fused representation vector corresponding to "五" is denoted as E, and the fused representation vector corresponding to "把" is denoted as F. Therefore, the start time point, in the current speech, corresponding to "五" predicted by the fully connected layer 1 is denoted as $W_{start}E$, and the end time point, in the current speech, corresponding to "把" predicted by the fully connected layer 2 is denoted as $W_{end}F$. For example, FIG. 5 shows a start time point of each text unit predicted by the fully connected layer 1 and an end time point of each text unit predicted by the fully connected layer 2.

Optionally, an operation of pre-training the first machine learning model based on the predicted time information and a position mark, in the speech information, of a speech unit corresponding to each text unit in the text information includes the following steps. A first loss function is constructed based on the start time point and the end time point, in the speech information, corresponding to the text unit and the pre-marked start position and end position, in the speech information, of the speech unit corresponding to the text unit. The first machine learning model is pre-trained based on the first loss function. Optionally, the first loss function includes a first difference and a second difference, the first difference is obtained based on the start time point and the start position, and the second difference is obtained based on the end time point and the end position.

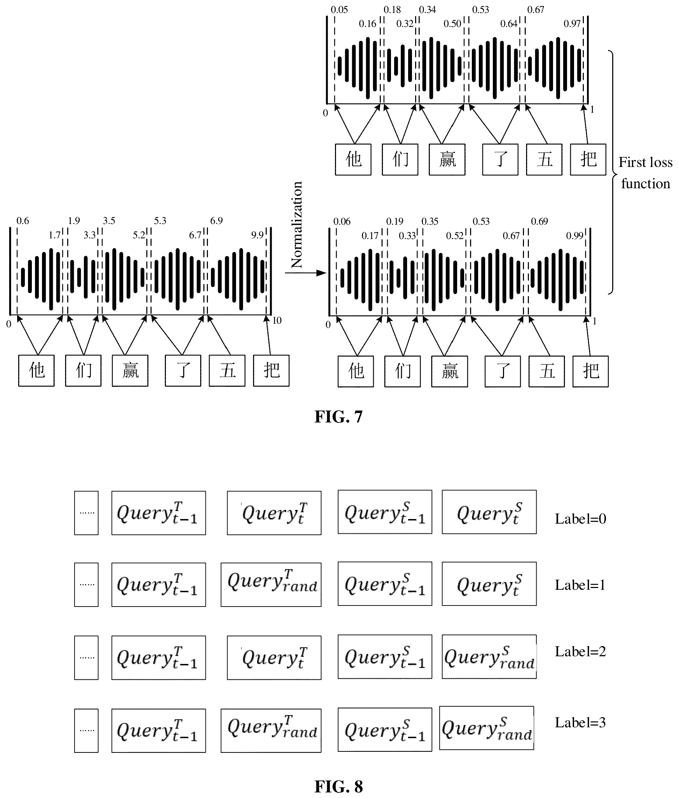

For example, as shown in FIG. 7, a duration of the current speech is 10 seconds, that is, the current speech starts from a 0th second and ends at a 10th second. In some embodiments, a start position and an end position, in the current speech, of a speech unit corresponding to each text unit in the current text, for example, "他们赢了五把", is pre-marked. For example, the start position and the end position, in the current speech, of the speech unit corresponding to "他" are respectively a 0.6th second and a 1.7th second, ..., and the start position and the end position, in the current speech, of the speech unit corresponding to "五把" are respectively a 6.9th second a 9.9th second.

Since the start time point predicted by the fully connected layer 1 and the end time point predicted by the fully connected layer 2 are both values between 0 and 1, in order to match the values between 0 and 1 in order of magnitude. In some embodiments, normalization is performed on the duration of the current speech. For example, the duration of the current speech is normalized to one second, that is, a start position of the current speech is normalized to a 0th second, and an end position of the current speech is normalized to a 1st second. In this way, the start position and the end position, in the current speech, of the speech unit corresponding to each text unit in "他们赢了五把" is normalized. For example, after being normalized, the start position and the end position, in the current speech, of the speech unit corresponding to "他" are respectively a 0.06th second and a 0.17th second, ..., and the start position and the end position, in the current speech, of the speech unit corresponding to "five" are respectively a 0.69th second and a 0.99th second. In other words, during the normalization, all are divided by the duration (for example, 10 seconds) of the current speech.

As shown in FIG. 7, for the same text unit, for example "他", in the current text, the start time point, in the current speech, corresponding to "他" predicted by the fully connected layer 1 is 0.05, and the predicted start position, in the current speech, of the speech unit corresponding to "他" is the 0.06th second. That is, a specific difference exists between the start time point and the start position, and the difference is denoted as a first difference. Moreover, the end time point, in the current speech, corresponding to "他" predicted by the fully connected layer 2 is 0.16, and the pre-marked end position, in the current speech, of the speech unit corresponding to "他" is the 0.17th second. That is, a specific difference exists between the end time point and the end position, and the difference is denoted as a second difference. In addition, similarly, for another text unit in the current text, a first difference and a second difference also exists. Moreover, some embodiments is described by using an example in which the start time point and the end time point of each text unit in the current text are predicted. In some embodiments, time information, in the historical speech, corresponding to each text unit in the historical text is predicted. For example, a start time point and an end time point, in a 1st round of historical speech, corresponding to each text unit in a 1st round of historical text are predicted based on a fused representation vector corresponding to each encoding unit in the 1st round of historical text, ..., and a start time point and an end time point, in an 8th round of historical speech, corresponding to each text unit in the 8th round of historical text are predicted. Therefore, similarly, for each text unit in each round of historical text, a first difference and a second difference also exist.

Therefore, in some embodiments, the first loss function is constructed based on the first difference and the second difference respectively corresponding to each text unit in multiple rounds of text (including the historical text and the current text). Further, the first machine learning model shown in FIG. 3 is pre-trained based on the first loss function. For example, the first loss function $\mathcal{L}_{TPP}$ is expressed as the following equation:

$$\mathcal{L}_{TPP} = \sum_{i=1}^{m} \sum_{j=1}^{n} \frac{1}{2}\left(\left(W_{start}h_{s_{ij}} - \frac{s_{ij}}{L_a}\right)^2 + \left(W_{end}h_{e_{ij}} - \frac{e_{ij}}{L_a}\right)^2\right).$$

The first loss function uses a mean squared error (MSE), that is, a square of a difference between a prediction result (for example, a predicted start time point or end time point) and a true position (for example, a pre-marked start position or end position). i represents an ith round of text, and m represents a quantity of rounds of texts or a quantity of texts. j represents a jth text unit, for example, a jth word, in the ith round of text. n represents a quantity of words contained in the ith round of text. $W_{start}$ represents a parameter contained in the fully connected layer 1. $W_{end}$ represents a parameter contained in the fully connected layer 2. $h_{s_{ij}}$ represents a fused representation vector corresponding to a first encoding unit in the jth text unit in the ith round of text, and $h_{e_{ij}}$ represents a fused representation vector corresponding to a last encoding unit in the jth text unit in the ith round of text. In response to the jth text unit including one encoding unit, the first encoding unit and the last encoding unit herein are the same encoding unit, that is, $h_{s_{ij}}$ and $h_{e_{ij}}$ are the same. In response to the jth text unit including multiple encoding units, the first encoding unit and the last encoding unit herein are different, that is, $h_{s_{ij}}$ and $h_{e_{ij}}$ are different. It is understood that in during the pre-training, $W_{start}$ and $W_{end}$ are respectively to-be-trained parameters. $W_{start}h_{s_{ij}}$ represents a start time point, in an ith round of speech, of the jth text unit in the ith round of text predicted by the fully connected layer 1, and $W_{end}h_{e_{ij}}$ represents an end time point, in the ith round of speech, of the jth text unit in the ith round of text predicted by the fully connected layer 2. $s_{ij}$ represents a pre-marked start position, in the ith round of speech, of the jth text unit in the ith round of text before normalization, and $e_{ij}$ represents a pre-marked end position, in the ith round of speech, of the jth text unit in the ith round of text before normalization. $L_a$ represents a duration of the ith round of speech, or represents a largest duration in multiple rounds of speeches. $L_a$ is configured to perform the normalization described above.

In addition, during pre-training of the first machine learning model shown in FIG. 3 or FIG. 6 based on the first loss function, parameters in each to-be-trained structure, for example, the text encoder, the speech encoder, the modal fusion layer, the fully connected layer 1, and the fully connected layer 2 shown in FIG. 3 or FIG. 6 are iteratively updated until multiple iterations reaches a preset quantity or the parameters converge.

For example, the parameters in each to-be-trained structure shown in FIG. 3 or FIG. 6 are adjusted based on a similarity or a difference between the prediction result outputted by the first machine learning model and the pre-marked true position, so that the prediction result outputted by the first machine learning model and the pre-marked true position are gradually similar in a subsequent iterative training process. In an example, guidance is provided for the parameter adjustment based on gradient data between the prediction result outputted by the first machine learning model and the pre-marked true position. A gradient is essentially a vector (vector), which indicates that a direction derivative of a function at the point obtains a maximum value along the direction, that is, the function at the point along the direction (a direction of the gradient) changes fastest at a maximum change rate. Based on this principle, guidance is provided for adjustment of a parameter in terms of direction, so that the prediction result outputted by the first machine learning model approaches the pre-marked true position.

As described above, sample data used for pre-training the first machine learning model includes text information and speech information. For example, the text information includes seven rounds of historical texts and one round of current text, the speech information includes one round of historical speech and one round of current speech, and the seven rounds of historical texts and the one round of current text are eight consecutive sentences in the same dialog. Similarly, the one round of historical speech and the one round of current speech are two consecutive speeches in the same dialog. That is, semantic coherence exists between the seven rounds of historical texts and the one round of current text, and semantic coherence exists between the one round of historical speech and the one round of current speech. In some embodiments, other three types of sample data are derived based on the sample data. For example, a first type of sample data is derived after the one round of current text in the sample data is replaced with a sentence in another dialog. In this case, semantic coherence no longer exists between the seven rounds of historical texts and the one round of current text, but still exists between the one round of historical speech and the one round of current speech. For another example, a second type of sample data is derived after the one round of current speech in the sample data is replaced with a speech in another dialog. In this case, semantic coherence no longer exists between the one round of historical speech and the one round of current speech, but still exists between the seven rounds of historical texts and the one round of current text. For another example, a third type of sample data is derived after the one round of current text in the sample data is replaced with a sentence in another dialog and the one round of current speech in the sample data is replaced with a speech in another dialog. In this case, semantic coherence no longer exists between the seven rounds of historical texts and the one round of current text and between the one round of historical speech and the one round of current speech. In response to original sample data being denoted as sample data with a label of 0 shown in FIG. 8, other three types of sample data derived based on the original sample data are sequentially sample data with a label of 1, sample data with a label of 2, and sample data with a label of 3 shown in FIG. 8. $Query_{t-1}^T$ represents the historical text, $Query_t^T$ represents the current text, $Query_{t-1}^S$ represents the historical speech, $Query_t^S$ represents the current speech, $Query_{rand}^T$ represents the current text after being replaced with another sentence, and $Query_{rand}^S$ represents the current speech after being replaced with another speech.

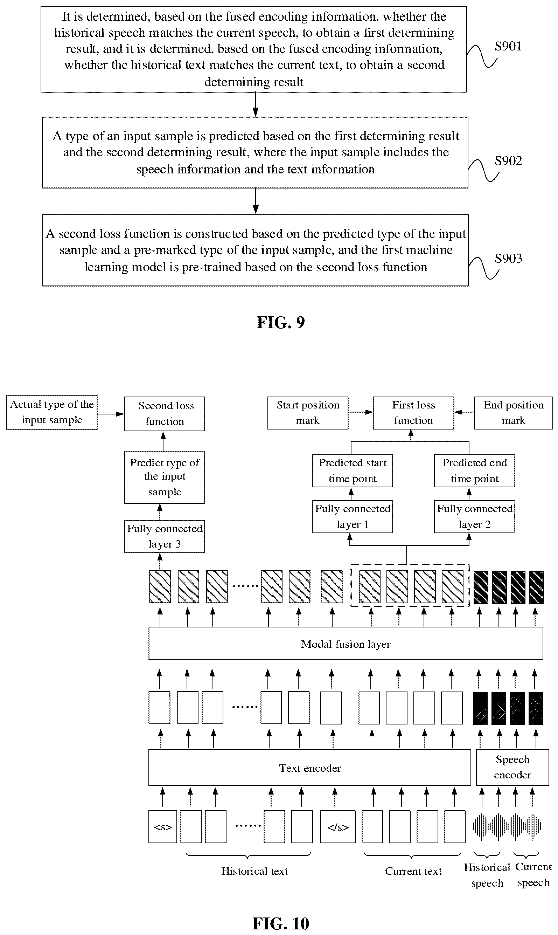

During the pre-training of the first machine learning model, the pre-training method further includes the following steps shown in FIG. 9.

In step S901, it is determined, based on the fused encoding information, whether the historical speech matches the current speech, to obtain a first determining result, and it is determined, based on the fused encoding information, whether the historical text matches the current text, to obtain a second determining result.

In some embodiments, the sample data with the label of 0, the sample data with the label of 1, the sample data with the label of 2, or the sample data with the label of 3 is used as an input of the first machine learning model. In other words, a current text shown in FIG. 10 is $Query_t^T$ or *Query and*. Similarly, a current speech shown in FIG. 10 is $Query_t^S$ or $Query_{rand}^S$. After processing by the text encoder, the speech encoder, and the modal fusion layer in the first machine learning model, the modal fusion layer outputs multiple fused representation vectors. In some embodiments, a first fused representation vector outputted by the modal fusion layer is inputted to a fully connected layer 3. The fully connected layer 3 is configured to determine whether a historical speech matches a current speech in the input, that is, whether semantic coherence exists between the historical speech and the current speech, to obtain a first determining result; and determine whether a historical text matches a current text in the input, that is, whether semantic coherence exists between the historical text and the current text, to obtain a second determining result.

It is understood that in response to the current text being $Query_t^T$, the historical text matches the current text. That is, semantic coherence exists between the historical text and the current text, and obvious context association exists between the historical text and the current text in terms of semantic content. In this case, the historical text and the current text are context in the same dialog. In response to the current text being $Query_{rand}^T$, the historical text does not match the current text. That is, the historical text and the current text are not context in the same dialog. Similarly, in response to the current speech being $Query_t^S$, the historical speech matches the current speech, semantic coherence exists between the historical speech and the current speech, and obvious context association exists between the historical speech and the current speech in terms of semantic content. In this case, the historical speech and the current speech are context in the same dialog. In response to the current speech being $Query_{rand}^S$, the historical speech does not match the current speech. That is, the historical speech and the current speech are not context in the same dialog.

Therefore, the first determining result described above has two cases. One is that the historical speech matches the current speech, and the other is that the historical speech does not match the current speech. Similarly, the second determining result has two cases. One is that the historical text matches the current text, and the other is that the historical text does not match the current text.

In step S902, a type of an input sample is predicted based on the first determining result and the second determining result, where the input sample includes the speech information and the text information.

For example, the fully connected layer 3 predicts the type of the input sample based on the first determining result and the second determining result. For example, in response to the first determining result indicating that the historical speech matches the current speech, and the second determining result indicating that the historical text matches the current text, the fully connected layer 3 predicts that the input sample is a sample with the label of 0. In response to the first determining result indicating that the historical speech matches the current speech, and the second determining result indicating that the historical text matches the current text, the fully connected layer 3 predicts that the input sample is a sample with the label of 1. In response to the first determining result indicating that the historical speech does not match the current speech, and the second determining result indicating that the historical text matches the current text, the fully connected layer 3 predicts that the input sample is a sample with the label of 2. In response to the first determining result indicating that the historical speech does not match the current speech, and the second determining result indicating that the historical text does not match the current text, the fully connected layer 3 predicts that the input sample is a sample with the label of 3. That is, the fully connected layer 3 predicts that the input sample is a sample with the label of 0, the label of 1, the label of 2, or the label of 3 based on the first determining result and the second determining result.

In some embodiments, the fully connected layer 3 may directly output a predicted input sample type, for example, Label = 0, Label = 1, Label = 2, or Label = 3.

In some embodiments, the fully connected layer 3 is a four-class task. To be specific, an output of the fully connected layer 3 is four probability values, and the four probability values sequentially represent probabilities that the type of the input sample is the input sample with the label of 0, the input sample with the label of 1, the input sample with the label of 2, and the input sample with the label of 3. Further, a type corresponding to the largest one of the four probability values is used as the type of the input sample predicted by the fully connected layer 3.

In step S903, a second loss function is constructed based on the predicted type of the input sample and a pre-marked type of the input sample, and the first machine learning model is pre-trained based on the second loss function. In some embodiments, whether the historical speech and the current speech in the input sample actually constitute context information and whether the historical text and the current text in the input sample actually constitute context information is pre-marked. That is, in some embodiments, an actual type of the input sample is pre-marked. To be specific, whether the input sample is a sample with the label of 0, a sample with the label of 1, a sample with the label of 2, or a sample with the label of 3 is pre-marked.

Further, in some embodiments, the second loss function is constructed based on the type of the input sample predicted by the fully connected layer 3 and the pre-marked actual type of the input sample. The second loss function is a cross entropy loss function for classification. Further, a first machine learning model shown in FIG. 10 is pre-trained based on the second loss function.

In some embodiments, it is determined whether the historical speech matches the current speech through the fused encoding information, to obtain the first determining result, and it is determined whether the historical text matches the current text, to obtain the second determining result. In this way, the first machine learning model can predict the type of the input sample based on the first determining result and the second determining result. In addition, the type of the input sample is pre-marked depending on whether the historical speech and the current speech actually constitute context information and whether the historical text and the current text actually constitute context information. The second loss function is constructed based on the pre-marked type of the input sample and the type of the input sample predicted by the first machine learning model, and the first machine learning model is pre-trained based on the second loss function, to obtain the pre-trained model. In this way, the pre-trained model can recognize the context information, which helps improve accuracy of user intention identification, sentiment analysis, and the like performed by the pre-trained model.

It is understood that in some embodiments, the first machine learning model is pre-trained separately based on the first loss function or the second loss function, or the first machine learning model is pre-trained jointly based on the first loss function and the second loss function. In addition, in addition to being performed through the timing prediction task (for example, predicting the start time point and the end time point, in the speech, of the text unit) and the cross-modal dialog reply selection task (for example, predicting the type of the input sample) described above, the task of pre-training the first machine learning model is further performed through other tasks. For example, the first machine learning model is further pre-trained through a mask prediction task. For example, in some embodiments, some words in the historical text or the current text are masked, and/or some speech clips in the historical speech or the current speech are masked. Then, a masked sample is inputted into the first machine learning model, and further, some masked words and/or speeches are predicted based on a fused representation vector outputted by the modal fusion layer. The third loss function is constructed based on some predicted masked words and/or speeches and some actual marked words and/or speeches, and the first machine learning model is pre-trained based on the third loss function. Therefore, different modal information, for example, texts and speeches, are used to model interaction between the text modal and the speech modal.

It is understood that, after the pre-training of the first machine learning model, the pre-trained model is obtained. The pre-trained model is used as a model base. The pre-trained model is further trained or tuned by using sample data of a downstream task, to obtain a trained machine learning model, so that the trained machine learning model can perform the downstream task.

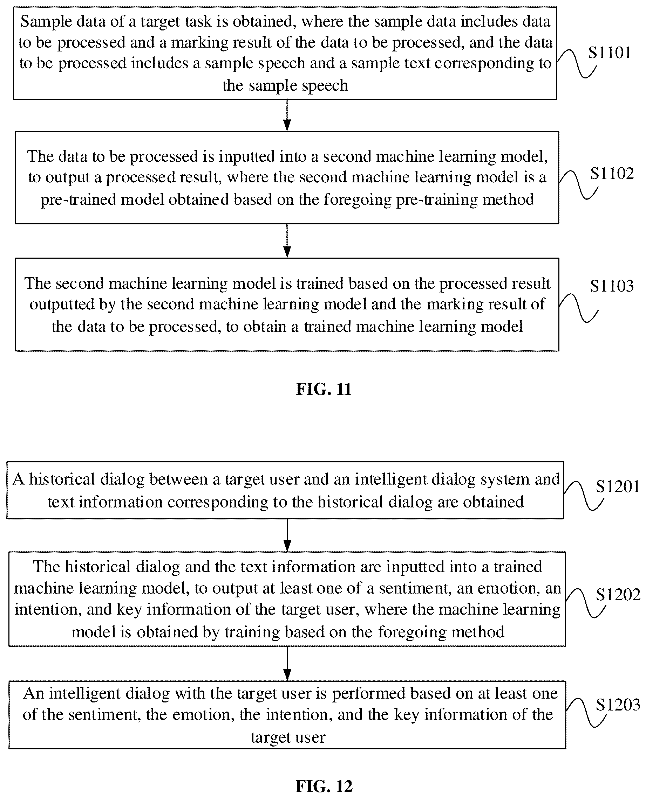

FIG. 11 is a flowchart of a method for training a machine learning model according to some embodiments of the present disclosure. The method for training the machine learning model is a method for training or tuning a pre-trained model. In some embodiments, the method includes the following specific steps.

In step S1101, sample data of a target task is obtained, where the sample data includes data to be processed and a marking result of the data to be processed, and the data to be processed includes a sample speech and a sample text corresponding to the sample speech.

For example, the pre-trained model is retained in the server 22. Further, the server 22 trains or tunes the pre-trained model. Specifically, the server 22 obtains the sample data of the target task. The target task is the downstream task described above. The sample data includes data to be processed and the marking result of the data to be processed, and the data to be processed includes the sample speech and the sample text corresponding to the sample speech. The marking result of the data to be processed is a user sentiment category, a user emotion category, or a user intention that are pre-marked based on the sample speech and/or the sample text, or key information in the sample speech or the sample text.

Optionally, the target task includes at least one of the following: a sentiment analysis task, an emotion recognition task, an intention analysis task, or a key information collection task.

For example, when the target task is the sentiment analysis task, the sample data obtained by the server 22 includes the sample speech, the sample text corresponding to the sample speech, and a pre-marked user sentiment category corresponding to the sample speech or the sample text. Specifically, the sample text includes a historical text and a current text, and the sample speech includes a historical speech and a current speech.

In step S1102, the data to be processed is inputted into a second machine learning model, to output a processed result, where the second machine learning model is a pre-trained model obtained based on the foregoing pre-training method.

For example, the historical text, the current text, the historical speech, and the current speech are inputted into the second machine learning model, that is, the pre-trained model, so that the text encoder, the speech encoder, and the modal fusion layer in the pre-trained model process an input of the pre-trained model to predict a user sentiment category corresponding to the sample speech or the sample text based on a fused representation vector (for example, a first fused representation vector) outputted by the modal fusion layer. The user sentiment category is used as a processing result outputted by the pre-trained model.

In step S1103, the second machine learning model is trained based on the processed result outputted by the second machine learning model and the marking result of the data to be processed, to obtain a trained machine learning model.

For example, the pre-trained model is trained or tuned based on the user sentiment category corresponding to the sample speech or the sample text predicted by the pre-trained model and the pre-marked user sentiment category corresponding to the sample speech or the sample text, to obtain the trained machine learning model.

Similarly, the pre-trained model is trained or tuned by using sample data of the emotion recognition task, the intention analysis task, or the key information collection task. It is understood that in some embodiments, the pre-trained model is trained or tuned separately through the sentiment analysis task, the emotion recognition task, the intention analysis task, or the key information collection task. Alternatively, the pre-trained model is trained or tuned jointly through the sentiment analysis task, the emotion recognition task, the intention analysis task, and the key information collection task. In addition, the training or tuning of the pre-trained model is not limited to the foregoing tasks. For example, the pre-trained model is trained or tuned by using another task.

For example, the sample speech is a dialog between a user and an intelligent dialog system. During the dialog, the user and the intelligent dialog system may talk about some key information. For example, in a scenario of ordering an air ticket, the intelligent dialog system may ask the user about a date and a time a required ticket, a type of the required ticket (for example, a discount ticket or a non-discount ticket), and the like. The data, the time, the type, and the like are key information. Therefore, in some embodiments, the pre-trained model is trained or tuned through the key information predicted by the pre-trained model and the pre-marked key information.

It is understood that during the training or training of the pre-trained model based on the sentiment analysis task, the emotion recognition task, the intention analysis task, and/or the key information collection task, a new fully connected layer is deployed in the pre-trained model, instead of using the fully connected layer 1, the fully connected layer 2, the fully connected layer 3, and the like described above.

In some embodiments, joint modeling is performed based on speeches and semantics in a dialog scenario for the first time, the first machine learning model is pre-trained based on the timing feature of the speeches through the timing prediction task, and the cross-modality dialog reply selection task is introduced to pre-train the first machine learning model. In this way, the pre-trained model obtained after the pre-training not only can align the speech information and the text information in timing, but also can recognize the context information. It is proved by an experiment that the solution provided in some embodiments achieves an improvement by 5 percent to 20 percent compared with an existing speech and semantic modeling method, and can understand a user speech more accurately, thereby improving user experience. Therefore, during use, the solution described in some embodiments not only can acquire finer and more accurate speech-text alignment, but also can capture more speech information, thereby helping a system understand a user intention more effectively and improving user experience.

In addition, the method described in some embodiments achieves an improvement compared with both a pure text model and a pure speech model, and achieves a larger improvement than the speech model, indicating that the model effectively facilitates speech and semantic joint modeling. In addition, the method achieves a significant improvement than an existing optimal speech semantic joint modeling pre-training method. Even a non-pre-training method achieves an improvement by more than one percent in all tasks than a current state of the art (SOTA) method, and even achieves an improvement by 3.1 percent in terms of multimodal dataset (MOSI).

In addition, in terms of disclosed dataset, the solution can achieve an improvement by 10.1% in accuracy compared with a pure text method, and can even achieve an improvement by 5% to 6% compared with an SOTA multimodal method.

FIG. 12 is a flowchart of an intelligent dialog method according to some embodiments of the present disclosure. The method is performed by a cloud server. For example, the trained or tuned machine learning model described above is deployed in the cloud server, and the cloud server may implement the intelligent dialog method described in some embodiments through the trained or tuned machine learning model. In some embodiments, the method includes the following specific steps.

In step S 1201, a historical dialog between a target user and an intelligent dialog system and text information corresponding to the historical dialog are obtained.

For example, the intelligent dialog system is pre-deployed in the cloud server, and the cloud server obtains the historical dialog between the target user and the intelligent dialog system and the text information corresponding to the historical dialog.

In step S1202, the historical dialog and the text information are inputted into a trained machine learning model, to output at least one of a sentiment, an emotion, an intention, and key information of the target user, where the machine learning model is obtained by training based on the foregoing method.

For example, the cloud server inputs the historical dialog and the text information into the trained or tuned machine learning model, to output at least one of a sentiment, an emotion, an intention, or key information of the target user.

In step S1203, an intelligent dialog with the target user is performed based on at least one of the sentiment, the emotion, the intention, and the key information of the target user.

For example, the cloud server performs the intelligent dialog with the target user based on at least one of the sentiment, the emotion, the intention, or the key information of the target user. For example, in response to a last sentence in the historical dialog being a question of the target user, the cloud server generates reply information of the question based on at least one of the sentiment, the emotion, the intention, or the key information of the target user, and feeds back the reply information to a terminal of the target user. In response to the last sentence in the historical dialog being a reply of the intelligent dialog system, the cloud server generates an interrogative sentence based on at least one of the sentiment, the emotion, the intention, or the key information of the target user, and feeds back the interrogative sentence to a terminal of the target user, so that the target user continues the dialog with the intelligent dialog system in the cloud server.

In some embodiments, the historical dialog between the target user and the intelligent dialog system and the text information corresponding to the historical dialog are obtained, and the historical dialog and the text information are inputted to the trained machine learning model, to output at least one of the sentiment, the emotion, the intention, or the key information of the target user. In this way, accuracy of the machine learning model in understanding the target user is improved. Further, an intelligent dialog is performed with the target user based on at least one of the sentiment, the emotion, the intention, or the key information of the target user. In this way, the machine learning model can perform an accurate dialog with the target user based on accurate understanding of the target user.

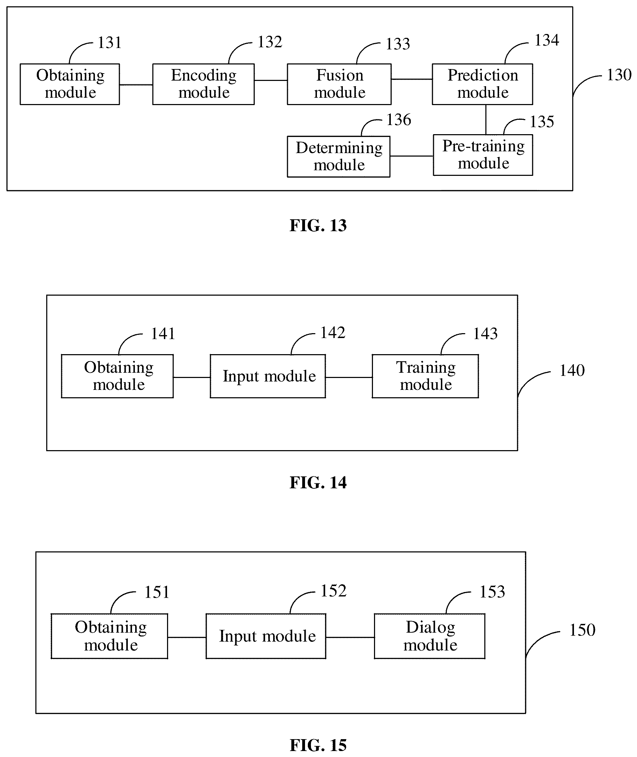

FIG. 13 is a structural schematic diagram of an apparatus for training a machine learning model according to some embodiments of the present disclosure. The apparatus for training the machine learning model provided in some embodiments of the present disclosure performs the processes provided in the embodiments of the method for training the machine learning model. As shown in FIG. 13, an apparatus 130 for training a machine learning model includes:

an obtaining module 131, configured to obtain speech information and text information corresponding to the speech information;

an encoding module 132, configured to perform encoding on the text information and the speech information respectively, to obtain text encoding information and speech encoding information;

a fusion module 133, configured to perform fusion on the text encoding information and the speech encoding information, to obtain fused encoding information;

a prediction module 134, configured to predict time information, in the speech information, corresponding to each text unit in the text information based on encoding information, in the fused encoding information, corresponding to the text information; and

a pre-training module 135, configured to pre-train the first machine learning model based on the predicted time information and a position mark, in the speech information, of a speech unit corresponding to each text unit in the text information.

Optionally, when performing encoding on the text information and the speech information respectively, to obtain the text encoding information and the speech encoding information, the encoding module 132 is specifically configured to:

perform encoding on at least one encoding unit respectively contained in each text unit in the text information through a text encoder, to obtain the text encoding information, where the text encoding information includes a representation vector of each encoding unit; and

perform encoding on each speech clip in the speech information through a speech encoder, to obtain the speech encoding information, where the speech encoding information includes a representation vector of each speech clip.

Optionally, the fused encoding information includes a fused representation vector corresponding to each encoding unit and a fused representation vector corresponding to each speech clip.

When predicting the time information, in the speech information, corresponding to each text unit in the text information based on the fused encoding information, the prediction module 134 is specifically configured to:

predict, in response to the text unit including one encoding unit, a start time point and an end time point, in the speech information, corresponding to each text unit based on a fused representation vector corresponding to the one encoding unit; and

predict, in response to the text unit includes multiple encoding units, a start time point, in the speech information, corresponding to each text unit based on a fused representation vector corresponding to a first encoding unit in the multiple encoding units, and predict an end time point, in the speech information, corresponding to the text unit based on a fused representation vector corresponding to a last encoding unit in the multiple encoding units.

Optionally, when pre-training the first machine learning model based on the predicted time information and the position mark, in the speech information, of the speech unit corresponding to each text unit in the text information, the pre-training module 135 is specifically configured to:

construct a first loss function based on the start time point and the end time point, in the speech information, corresponding to each text unit, and a start position and an end position marked in advance, in the speech information, of the speech unit corresponding to the text unit; and
pre-train the first machine learning model based on the first loss function.

Optionally, the first loss function includes a first difference and a second difference, the first difference is obtained based on the start time point and the start position, and the second difference is obtained based on the end time point and the end position.

Optionally, the speech information includes a historical speech and a current speech, and the text information includes a historical text and a current text. The model pre-training apparatus 130 further includes: a determining module 136, configured to determine whether the historical speech matches the current speech based on the fused encoding information, to obtain a first determining result, and determine whether the historical text matches the current text, to obtain a second determining result. The pre-training module 135 is further configured to: predict a type of an input sample based on the first determining result and the second determining result, where the input sample includes the speech information and the text information; and construct a second loss function based on the predicted type of the input sample and a pre-marked type of the input sample, and pre-train the first machine learning model based on the second loss function, to obtain a pre-trained model.

The model pre-training apparatus in the embodiment shown in FIG. 13 is configured to implement the technical solutions of the foregoing method embodiment, and has similar implementation principles and technical effects. Details are not described herein.

FIG. 14 is a structural schematic diagram of an apparatus for training a machine learning model according to some embodiments of the present disclosure. The apparatus for training the machine learning model provided in some embodiments of the present disclosure performs the processes provided in the embodiment of the method for training the machine learning model. As shown in FIG. 14, an apparatus 140 for training a machine learning model includes:

an obtaining module 141, configured to obtain sample data of a target task, where the sample data includes data to be processed and a marking result of the data to be processed, and the data to be processed includes a sample speech and a sample text corresponding to the sample speech;

an input module 142, configured to input the data to be processed into a second machine learning model, to output a processed result, where the second machine learning model is a pre-trained model obtained based on the foregoing pre-training method; and

a training module 143, configured to train the second machine learning model based on the processed result outputted by the second machine learning model and the marking result of the data to be processed, to obtain a trained machine learning model.

Optionally, the target task includes at least one of the following:
a sentiment analysis task, an emotion recognition task, an intention analysis task, or a key information collection task.

The model training apparatus in the embodiment shown in FIG. 14 is configured to implement the technical solutions of the foregoing method embodiments, and has similar implementation principles and technical effects. Details are not described herein.

FIG. 15 is a structural schematic diagram of an intelligent dialog apparatus according to some embodiments of the present disclosure. The intelligent dialog apparatus provided in some embodiments of the present disclosure performs the processes provided in the embodiments of the intelligent dialog method. As shown in FIG. 15, the intelligent dialog apparatus 150 includes:

an obtaining module 151, configured to obtain a historical dialog between a target user and an intelligent dialog system and text information corresponding to the historical dialog;

an input module 152, configured to input the historical dialog and the text information into a trained machine learning model, to output at least one of a sentiment, an emotion, an intention, or key information of the target user, where the machine learning model is obtained by training based on the foregoing method; and

a dialog module 153, configured to perform an intelligent dialog with the target user based on at least one of the sentiment, the emotion, the intention, or the key information of the target user.

The intelligent dialog apparatus in the embodiment shown in FIG. 15 is configured to implement the technical solutions of the foregoing method embodiment, and has similar implementation principles and technical effects. Details are not described herein.

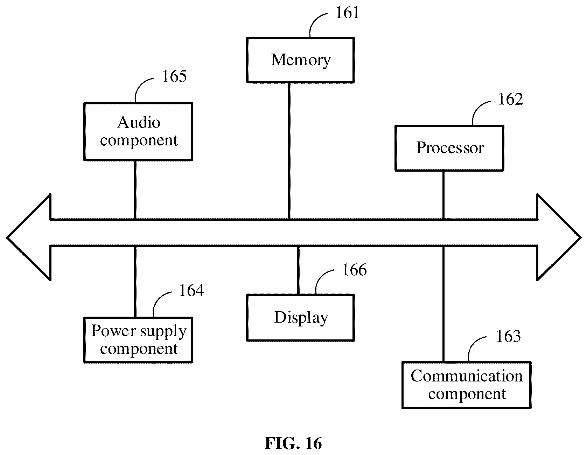

An internal function and a structure of the model pre-training apparatus are described above, and the apparatus is implemented as an electronic device. FIG. 16 is a structural schematic diagram of an electronic device embodiment according to some embodiments of the present disclosure. As shown in FIG. 16, the electronic device includes a memory 161 and a processor 162.

The memory 161 is configured to store a program. In addition to the program, the memory 161 is further configured to store various other data to support operations on the electronic device. Examples of the data include instructions, contact data, phonebook data, messages, pictures, videos, and the like of any application or method configured to be operated on the electronic device.

The memory 161 is implemented by any type of transitory or non-transitory storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The processor 162 is coupled with the memory 161 and executes the program stored in the memory 161 to be configured to:

obtain speech information and text information corresponding to the speech information;

perform encoding on the text information and the speech information respectively, to obtain text encoding information and speech encoding information;

perform fusion on the text encoding information and the speech encoding information, to obtain fused encoding information;

predict time information, in the speech information, corresponding to each text unit in the text information based on encoding information, in the fused encoding information, corresponding to the text information; and

pre-train a first machine learning model based on the predicted time information and a position mark, in the speech information, of a speech unit corresponding to each text unit in the text information, to obtain a pre-trained model.

Further, as shown in FIG. 16, the electronic device further includes: a communication component 163, a power supply component 164, an audio component 165, a display 166, and the like. Although some of the components are exemplified in FIG. 16, it does not mean that the electronic device includes only the components shown in FIG. 16.

The communication component 163 is configured to facilitate wired or wireless communication between the electronic device and another device. The electronic device may connect to a wireless network based on a communication standard, such as Wi-Fi, 2G, 3G, or a combination thereof. In some exemplary embodiments, the communication component 163 receives a broadcast signal or broadcast-related information from an external broadcast management system through a broadcast channel. In an exemplary embodiment, the communication component 163 further includes a near field communication (NFC) module, to facilitate short range communication. For example, the NFC module is implemented based on a radio frequency identification (RFID) technology, an infrared data association (IrDA) technology, an ultra wide band (UWB) technology, a bluetooth (BT) technology, and the like.

The power supply component 164 provides power to the components of the electronic device. The power supply component 164 may include a power supply management system, at least one power supply, and other components associated with generation, management, and power distribution for the electronic device.

The audio component 165 is configured to output and/or input an audio signal. For example, the audio component 165 includes a microphone (MIC). When the electronic device is in an operating mode, such as a call mode, a recording mode, and a speech recognition mode, the MIC is configured to receive an external audio signal. The received audio signal is further stored in the memory 161 or sent through the communication component 163. In some embodiments, the audio component 165 further includes a speaker configured to output an audio signal.

The display 166 includes a screen, and the screen includes a liquid crystal display (LCD) and a touch panel (TP). In response to the screen including the TP, the screen is implemented as a touchscreen, to receive an input signal from a user. The TP includes at least one touch sensor to sense touching, sliding, and gestures on the TP. The touch sensor may not only sense a boundary of a touching or sliding operation, but also detect a duration and a pressure related to the touching or sliding operation.

In addition, some embodiments of the present disclosure further provide a computer-readable storage medium, storing a computer program. The computer program is executed by a processor to implement the model pre-training method, the model training method, and the intelligent dialog method in the foregoing embodiments.

It is to be noted that the relational terms herein such as "first" and "second" are used for differentiating an entity or operation from another entity or operation, and do not require or imply any actual relationship or sequence between these entities or operations. Moreover, a term "contain", "include", or any other variant is intended to encompass non-exclusive inclusion, so that a process, a method, an article, or a device including a series of elements not only includes those elements, but also includes other elements not listed explicitly, or includes intrinsic elements of the process, the method, the article, or the device. Without more limitations, an element limited by a statement "include a/an..." does not exclude additional same elements existing in the process, the method, the article, or the device including the elements.

The foregoing descriptions are specific implementations of the present disclosure, so that a person having ordinary skill in the art can understand or implement the present disclosure. Various modifications to these embodiments are apparent to a person having ordinary skill in the art, and general principles defined herein is implemented in other embodiments without departing from the spirit or scope of the present disclosure. Therefore, the present disclosure is not limited to these embodiments described herein, but conforms to the broadest scope consistent with the principles and novel features disclosed herein.

**Industrial applicability**

The method and the apparatus for training a machine learning model, the dialog method, the device, and the medium provided in the embodiments of the present disclosure are applied to the machine learning scenario. The speech information and the text information corresponding to the speech information are obtained, and the encoding is performed on the text information and the speech information respectively, to obtain the text encoding information and the speech encoding information. Further, the fusion is performed on the text encoding information and the speech encoding information, to obtain the fused encoding information; the time information, in the speech information, corresponding to each text unit in the text information is predicted based on the fused encoding information; and then the first machine learning model is pre-trained based on the predicted time information and the position mark, in the speech information, of the speech unit corresponding to each text unit in the text information, to obtain the pre-trained model. In this way, the pre-trained model may align the speech information and the text information in timing, for example, align a finer text unit in the text information and a finer speech unit in the speech information, thereby improving a capability of the pre-trained model in understanding the speech information and the text information, and improving accuracy of the pre-trained model in understanding a user speech.

**Claims**

1.  A method for training a machine learning model, comprising:

    obtaining speech information and text information corresponding to the speech information;
    performing encoding on the text information and the speech information respectively, to obtain text encoding information and speech encoding information;
    performing fusion on the text encoding information and the speech encoding information, to obtain fused encoding information;
    predicting time information, in the speech information, corresponding to each text unit in the text information based on encoding information, in the fused encoding information, corresponding to the text information; and
    pre-training a first machine learning model based on the predicted time information and a position mark, in the speech information, of a speech unit corresponding to each text unit in the text information, to obtain a pre-trained model.

2.  The method according to claim 1, wherein performing encoding on the text information and the speech information respectively, to obtain the text encoding information and the speech encoding information comprises:

    performing encoding on at least one encoding unit respectively contained in each text unit in the text information through a text encoder, to obtain the text encoding information, wherein the text encoding information comprises a representation vector of each encoding unit; and
    performing encoding on each speech clip in the speech information through a speech encoder, to obtain the speech encoding information, wherein the speech encoding information comprises a representation vector of each speech clip.

3.  The method according to claim 2, wherein the fused encoding information comprises a fused representation vector corresponding to each encoding unit and a fused representation vector corresponding to each speech clip;
    predicting the time information, in the speech information, corresponding to each text unit in the text information based on the fused encoding information comprises:

    in response to each text unit comprising one encoding unit, predicting a start time point and an end time point, in the speech information, corresponding to each text unit based on a fused representation vector corresponding to the one encoding unit; and
    in response to each text unit comprises a plurality of encoding units, predicting a start time point, in the speech information, corresponding to each text unit based on a fused representation vector corresponding to a first encoding unit in the plurality of encoding units, and predicting an end time point, in the speech information, corresponding to each text unit based on a fused representation vector corresponding to a last encoding unit in the plurality of encoding units.

4.  The method according to claim 3, wherein pre-training the first machine learning model based on the predicted time information and the position mark, in the speech information, of the speech unit corresponding to each text unit in the text information comprises:

    constructing a first loss function based on the start time point and the end time point, in the speech information, corresponding to each text unit, and a start position and an end position marked in advance, in the speech information, of the speech unit corresponding to the text unit; and
    pre-training the first machine learning model based on the first loss function.

5.  The method according to claim 4, wherein the first loss function comprises a first difference and a second difference, the first difference is obtained based on the start time point and the start position, and the second difference is obtained based on the end time point and the end position.

6.  The method according to claim 1, wherein the speech information comprises a historical speech and a current speech, and the text information includes a historical text and a current text; and
    the method further comprises:

    determining whether the historical speech matches the current speech based on the fused encoding information, to obtain a first determining result, and determining whether the historical text matches the current text, to obtain a second determining result;

predicting a type of an input sample based on the first determining result and the second determining result, wherein the input sample comprises the speech information and the text information; and

constructing a second loss function based on the predicted type of the input sample and a pre-marked type of the input sample, and pre-training the first machine learning model based on the second loss function, to obtain the pre-trained model.

7. A method for training a machine learning model, comprising:

obtaining sample data of a target task, wherein the sample data comprises data to be processed and a marking result of the data to be processed, and the data to be processed comprises a sample speech and a sample text corresponding to the sample speech;

inputting the data to be processed into a second machine learning model, to output a processed result, wherein the second machine learning model is a pre-trained model obtained based on the pre-training method as claimed in any one of claims 1 to 6; and

training the second machine learning model based on the processed result outputted by the second machine learning model and the marking result of the data to be processed, to obtain a trained machine learning model.

8. The method according to claim 7, wherein the target task comprises at least one of the following:
a sentiment analysis task, an emotion recognition task, an intention analysis task, or a key information collection task.

9. An intelligent dialog method, comprising:

obtaining a historical dialog between a target user and an intelligent dialog system and text information corresponding to the historical dialog;

inputting the historical dialog and the text information into a trained machine learning model, to output at least one of a sentiment, an emotion, an intention, and key information of the target user, wherein the machine learning model is obtained by training based on the method as claimed in claim 7; and

performing an intelligent dialog with the target user based on at least one of the sentiment, the emotion, the intention, and the key information of the target user.

10. An apparatus for training a machine learning model, comprising:

an obtaining module, configured to obtain speech information and text information corresponding to the speech information;

an encoding module, configured to perform encoding on the text information and the speech information respectively, to obtain text encoding information and speech encoding information;

a fusion module, configured to perform fusion on the text encoding information and the speech encoding information, to obtain fused encoding information;

a prediction module, configured to predict time information, in the speech information, corresponding to each text unit in the text information based on encoding information, in the fused encoding information, corresponding to the text information; and

a pre-training module, configured to pre-train the first machine learning model based on the predicted time information and a position mark, in the speech information, of a speech unit corresponding to each text unit in the text information.

11. An electronic device, comprising:

a memory;

a processor; and

a computer program;

wherein the computer program is stored in the memory and configured to be executed by the processor to implement the method as claimed in any one of claims 1 to 9.

12. A computer-readable storage medium, storing a computer program, wherein the computer program, when executed by a processor, implements the method as claimed in any one of claims 1 to 9.

| | |
|---|---|
| Speech information and text information corresponding to the speech information are obtained | S101 |

↓

| | |
|---|---|
| Encoding is performed on the text information and the speech information respectively, to obtain text encoding information and speech encoding information | S102 |

↓

| | |
|---|---|
| Fusion is performed on the text encoding information and the speech encoding information, to obtain fused encoding information | S103 |

↓

| | |
|---|---|
| Time information, in the speech information, corresponding to each text unit in the text information is predicted based on encoding information, in the fused encoding information, corresponding to the text information | S104 |

↓

| | |
|---|---|
| A first machine learning model is pre-trained based on the predicted time information and a position mark, in the speech information, of a speech unit corresponding to each text unit in the text information, to obtain a pre-trained model | S105 |

**FIG. 1**

22

21

**FIG. 2**

FIG. 3

User AAAAAA

BBBBBB Intelligent dialog system

User CCCC

DDDD Intelligent dialog system

User EEEEEE

FFFFFF Intelligent dialog system

User GGGGG

HHHHH Intelligent dialog system

**FIG. 4**

0.05    0.18    0.34    0.53    0.67

0.16    0.32    0.50    0.64    0.97

0        1

他    们    赢    了    五    把

**FIG. 5**

FIG. 6

**FIG. 7**

**FIG. 8**

It is determined, based on the fused encoding information, whether the historical speech matches the current speech, to obtain a first determining result, and it is determined, based on the fused encoding information, whether the historical text matches the current text, to obtain a second determining result ~ S901

A type of an input sample is predicted based on the first determining result and the second determining result, where the input sample includes the speech information and the text information ~ S902

A second loss function is constructed based on the predicted type of the input sample and a pre-marked type of the input sample, and the first machine learning model is pre-trained based on the second loss function ~ S903

**FIG. 9**

**FIG. 10**

Sample data of a target task is obtained, where the sample data includes data to be processed and a marking result of the data to be processed, and the data to be processed includes a sample speech and a sample text corresponding to the sample speech

S1101

The data to be processed is inputted into a second machine learning model, to output a processed result, where the second machine learning model is a pre-trained model obtained based on the foregoing pre-training method

S1102

The second machine learning model is trained based on the processed result outputted by the second machine learning model and the marking result of the data to be processed, to obtain a trained machine learning model

S1103

**FIG. 11**

A historical dialog between a target user and an intelligent dialog system and text information corresponding to the historical dialog are obtained

S1201

The historical dialog and the text information are inputted into a trained machine learning model, to output at least one of a sentiment, an emotion, an intention, and key information of the target user, where the machine learning model is obtained by training based on the foregoing method

S1202

An intelligent dialog with the target user is performed based on at least one of the sentiment, the emotion, the intention, and the key information of the target user

S1203

**FIG. 12**

131
Obtaining module

132
Encoding module

133
Fusion module

134
Prediction module

130

136
Determining module

135
Pre-training module

**FIG. 13**

141
Obtaining module

142
Input module

143
Training module

140

**FIG. 14**

151
Obtaining module

152
Input module

153
Dialog module

150

**FIG. 15**

**FIG. 16**

| INTERNATIONAL SEARCH REPORT | International application No. |
|---|---|
| | **PCT/SG2024/050199** |

**A. CLASSIFICATION OF SUBJECT MATTER**

See Extra Box

According to International Patent Classification (IPC)

**B. FIELDS SEARCHED**

Minimum documentation searched (classification system followed by classification symbols)

G10L, G06F, G06N

Documentation searched other than minimum documentation to the extent that such documents are included in the fields searched

Electronic data base consulted during the international search (name of data base and, where practicable, search terms used)

FAMPAT, IEEE, CNKI: 预测, 时间, 文本, 语音, 标注, 机器学习, predict, time, text, audio, label, machine learning and other related search terms.

**C. DOCUMENTS CONSIDERED TO BE RELEVANT**

| Category* | Citation of document, with indication, where appropriate, of the relevant passages | Relevant to claim No. |
|---|---|---|
| X | CN 114360504 A (TENCENT SCIENCE AND TECHNOLOGY (SHENZHEN) LIMITED COMPANY), 15 April 2022, figures 3A and 3C, and paragraphs [0027]-[0030], [0075], [0078], [0080], [0081], [0083], [0084], [0098], [0101]-[0104], [0106]-[0108], [0110] and [0120]-[0123] | 1-12 |
| A | CN 114267345 A (ALIBABA DHARMA ACADEMY (HANGZHOU) TECHNOLOGY CO., LTD.), 01 April 2022, entire document | |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of the issuance of the international search report |
|---|---|
| 25 June 2024 | 25 June 2024 |

| Name and mailing address of the ISA/SG | Authorized officer |
|---|---|
| **Intellectual Property Office of Singapore** 1 Paya Lebar Link, #11-03 PLQ 1, Paya Lebar Quarter Singapore 408533 E-mail: pct@ipos.gov.sg | ZHAO, Xue (Dr.) |
| | IPOS Telephone No. (+65) 6339 8616 |

Form PCT/ISA/210 (second sheet) (July 2022)

### INTERNATIONAL SEARCH REPORT

| International application No. |
| --- |
| **PCT/SG2024/050199** |

**C (Continuation).    DOCUMENTS CONSIDERED TO BE RELEVANT**

| Category* | Citation of document, with indication, where appropriate, of the relevant passages | Relevant to claim No. |
| --- | --- | --- |
| A | CN 114691852 A (ALIBABA DHARMA ACADEMY (HANGZHOU) TECHNOLOGY CO., LTD.), 01 July 2022, entire document | |
| A | CN 114936560 A (ALIBABA (CHINA) CO., LTD.), 23 August 2022, entire document | |

Form PCT/ISA/210 (continuation of second sheet (1)) (July 2022)

## INTERNATIONAL SEARCH REPORT
### Information on patent family members

| International application No. |
| --- |
| **PCT/SG2024/050199** |

*Note: related known patent family members of the patent documents referred to by this international search report are listed in this annex. This authority only provides information on the related patent family members, and assumes no responsibility for the details of the patents.*

| Patent Documents referred in the Report | Publication Date/Announcement Date (day/month/year) | Patent Family | Publication Date/Announcement Date (day/month/year) |
| --- | --- | --- | --- |
| CN 114360504 A | 15/04/2022 | US 2023/0306959 A1 | 28/09/2023 |
| | | WO 2023/093295 A1 | 01/06/2023 |
| CN 114267345 A | 01/04/2022 | None | |
| CN 114691852 A | 01/07/2022 | US 2023/0395075 A1 | 07/12/2023 |
| CN 114936560 A | 23/08/2022 | None | |

Form PCT/ISA/210 (patent family annex) (July 2022)

## INTERNATIONAL SEARCH REPORT

| International application No. |
|---|
| **PCT/SG2024/050199** |

**EXTRA BOX**

**(CLASSIFICATION OF SUBJECT MATTER)**

International Classification Symbol:

*G10L 15/00 (2013.01)*

*G06F 40/00 (2020.01)*

*G06N 20/00 (2019.01)*

*G06N 3/08 (2023.01)*

*G06F 16/332 (2019.01)*

Form PCT/ISA/210 (extra sheet) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310397072